# FASCICULE DE BREVET EUROPEEN

(11) **EP 0 596 775 B1**
(45) Date de publication et mention de la délivrance du brevet: **11.09.1996**
(21) Numéro de dépôt: 93402634.5
(22) Date de dépôt: 27.10.1993
(51) Int. Cl.: H02G 13/00

(54) **Paratonnerre à dispositif d'amorçage à décharge électrique glissante le long d'un diélectrique**
Blitzableiter mit Entzündungsvorrichtung mit gleitender elektrischer Entladung längs eines dielektrischen Teiles
Lightning protector with ignition device with sliding electrical discharge along a dielectric

(30) Priorité: 28.10.1992 FR 9212860
(43) Date de publication de la demande: 11.05.1994
(73) Titulaire: HELITA S.A., F-75001 Paris (FR)
(72) Inventeur: Berger, Gérard, F-91120 Palaiseau (FR); Floret, Nicolas, F-92800 Puteaux (FR)
(74) Mandataire: Martin, Jean-Jacques

(56) Documents cités:
- EP-A- 0 096 655
- EP-A- 0 228 984
- FR-A- 2 043 220
- FR-A- 2 620 581

## Description

La présente invention concerne de manière générale les systèmes de protection contre la foudre, et plus particulièrement un nouveau paratonnerre à dispositif d'amorçage à décharge électrique glissante le long d'un diélectrique.

L'invention trouve une application particulièrement avantageuse à la protection directe contre la foudre des bâtiments, maisons individuelles, immeubles, usines et de manière générale, toute zone, toute personne, toute structure ou équipement que l'on souhaite protéger contre l'impact direct de la foudre.

En outre, l'invention trouve une application particulièrement avantageuse à la protection directe contre la foudre des équipements disposés sur des structures métalliques et des conducteurs, tels que des antennes de télécommunication. Elle renforce la protection des câbles haute tension et moyenne tension des pylônes électriques en renforçant l'efficacité des câbles de garde et en améliorant la capture des éclairs pour les pylônes eux-mêmes.

On connaît un paratonnerre classique du type tige de Franklin ou pointe de Franklin, qui est composé d'une tige métallique dont une extrémité est reliée à la terre et dont l'autre extrémité présente la forme d'une pointe.

Un tel paratonnerre fonctionne de la manière suivante. Lorsqu'un nuage orageux se forme, le champ électrique atmosphérique au niveau du sol augmente jusqu'à des valeurs de l'ordre de 10 kV/m. Un effet couronne apparaît alors à la pointe de la tige de Franklin. Ultérieurement, un coup de foudre commence par la formation, au sein du nuage orageux, d'un traceur descendant qui va progresser par bonds vers le sol. En même temps que le traceur issu du nuage progresse vers le sol, l'ionisation de l'air au voisinage de la pointe de Franklin due à l'effet couronne continue à se développer. Lorsque le traceur descendant atteint une altitude de l'ordre de 100 mètres au-dessus de la tige de Franklin, le champ électrique qu'il développe dans un large voisinage de la tige dépasse une valeur minimale de l'ordre de quelques centaines de kVolts par mètre. Les effluves d'effet couronne, jusque là localisées près de la pointe, se transforment soudainement en une décharge ou traceur ascendant caractérisé par une succession de vagues d'ionisation séparées par des périodes de repos ou périodes sombres. Ce phénomène est appelé encore effet couronne aléatoire. Pour des valeurs du champ électrique encore supérieures, le traceur ascendant commence à se propager sans discontinuité et rejoint ultérieurement le traceur descendant. La jonction entre les deux traceurs opposés est d'autant plus éloignée de la tige de Franklin que le traceur ascendant continu se développe plus tôt.

Le principal inconvénient d'un paratonnerre du type tige de Franklin réside dans le fait que la durée de la période de démarrage pendant laquelle se produit l'effet de couronne aléatoire est longue. De ce fait, le traceur ascendant continu se développe tard et la rencontre entre les deux traceurs est proche de la tige de Franklin.

Une solution technique à ce problème est d'équiper la tige de Franklin d'un dispositif d'amorçage qui puisse contribuer à l'élimination des périodes de repos ou périodes sombres dans le développement du traceur ascendant afin de réduire artificiellement la durée de la période de démarrage du traceur ascendant continu.

Dans ce but, on connaît par le document EP-0 228 984 un paratonnerre à éclateur à air, comprenant une tige métallique reliée à la terre et entourée d'une coque creuse en métal également. La tige reliée par une de ses extrémités à la terre comporte à l'autre extrémité une pointe qui émerge de l'extérieur à travers une ouverture circulaire prévue dans la coque creuse. La coque est isolée de la tige métallique par de l'air, de telle sorte qu'un intervalle d'air est défini entre ladite ouverture circulaire de la coque et la pointe de la tige. En outre, il est nécessaire que la coque soit reliée à la tige centrale par une résistance d'isolement à haute impédance.

Ainsi, lorsque le nuage orageux se trouve aux environs du paratonnerre précité et qu'un traceur descendant s'approche de ce paratonnerre, la coque métallique se charge électriquement jusqu'à atteindre un potentiel critique au-dessus duquel une étincelle se forme à partir de la coque et se propage dans l'intervalle d'air jusqu'à la pointe de la tige. Cette étincelle provoque la décharge de la coque métallique.

Le fonctionnement du dispositif d'amorçage électrique de ce paratonnerre est aléatoire. En effet, l'étincelle formée dans l'intervalle d'air entre la tige et la coque métallique parvient de manière aléatoire dans le temps et dans l'espace et de "manière prématurée", à la pointe de la tige.

En outre, on connaît par le document FR-2 620 581 une installation de paratonnerre qui comporte une tige creuse reliée à la terre, à l'intérieur de laquelle est disposé un conducteur d'électricité isolé électriquement de la tige et débouchant à une extrémité de celle-ci pour être relié à des moyens complexes adaptés pour prélever le potentiel atmosphérique, de manière à provoquer des phénomènes d'éclatement entre ce conducteur et la tige.

Par ailleurs, on connaît par le document EP-0 096 655 une installation de paratonnerre qui comprend une tige reliée à la terre et un organe conducteur d'électricité qui comporte d'une part une première partie qui s'étend radialement par rapport à la tige et qui se termine par des pointes permettant de prendre facilement le potentiel électrique atmosphérique, et d'autre part une seconde partie formant une électrode qui s'étend à partir de la première partie en direction de la tige suivant un trajet courbe, disposée à faible distance de la tige pour que, par temps d'orage, une décharge électrique s'établisse entre ladite électrode et la tige.

Enfin, on connaît par le document FR-2 043 220 une installation de paratonnerre qui comporte une tige reliée à la terre et une source radio-active à radiation bêta portée par la tige à proximité de son extrémité.

Ces trois installations de paratonnerre sont complexes et ne fonctionnent pas de manière satisfaisante.

La présente invention propose un nouveau paratonnerre à dispositif d'amorçage électrique qui vise à résoudre les inconvénients précités de l'art antérieur.

Plus particulièrement, selon l'invention, le paratonnerre à dispositif d'amorçage à décharge électrique comprend :
- une électrode centrale présentant une extrémité libre et une extrémité reliée à la terre,
- une pièce en matériau isolant entourant l'électrode centrale et présentant une surface extérieure venant se raccorder de manière continue à l'extrémité libre de l'électrode centrale,
- une électrode extérieure électriquement conductrice recouvrant partiellement ladite surface extérieure de la pièce isolante de telle façon qu'une partie non recouverte de ladite surface extérieure, qui vient se raccorder à l'extrémité libre de l'électrode centrale, définit un pont en matériau isolant entre ladite électrode extérieure et l'extrémité libre de l'électrode centrale,
ledit pont étant apte à guider une étincelle entre l'électrode extérieure électriquement conductrice, chargée électriquement dans des conditions atmosphériques appropriées, et l'extrémité libre de l'électrode centrale pendant la décharge de ladite électrode extérieure.

Ainsi, lorsqu'un traceur descendant issu d'un nuage orageux approche du paratonnerre selon l'invention, l'électrode extérieure électriquement conductrice se charge par influence électrique jusqu'à ce que son potentiel électrique atteigne une valeur critique à partir de laquelle une étincelle se forme entre l'électrode extérieure électriquement conductrice et l'extrémité libre de l'électrode centrale, avantageusement en forme de pointe, ce qui permet de créer un plasma au voisinage de la pointe de l'électrode centrale. Ce plasma associé au champ électrique intense régnant au voisinage de l'extrémité de l'électrode centrale, constitue la première étape du développement d'un traceur ascendant. L'étincelle de décharge de l'électrode extérieure est intense et vigoureuse car elle glisse le long de la surface extérieure de la pièce isolante, et plus particulièrement sur le pont entre l'électrode extérieure et la pointe de l'électrode centrale, ce pont formant un tremplin pour l'étincelle entre l'électrode extérieure et l'extrémité libre de l'électrode centrale.

Dans le cas du paratonnerre selon l'invention, la valeur du champ électrique d'autopropagation de l'étincelle de déclenchement est jusqu'à dix fois plus faible que celle du champ correspondant des paratonnerres des techniques précitées de l'art antérieur.

De préférence, selon l'invention ladite surface extérieure de la pièce isolante comporte au moins une portion de forme essentiellement convexe vers l'extérieur et l'électrode extérieure électriquement conductrice repose sur cette portion convexe de la surface extérieure.

Il convient de préciser qu'il y a avantage à ce que l'électrode extérieure ne présente aucune partie saillante qui pourrait favoriser la formation parasite d'étincelles à d'autres endroits qu'entre l'extrémité libre de l'électrode centrale et l'électrode extérieure. En effet, la forme et la disposition de la pièce isolante et de l'électrode extérieure électriquement conductrice sont prévues de manière à ce que l'étincelle se forme à partir du bord de ladite électrode extérieure, adjacent au pont en matériau isolant formant le tremplin jusqu'à l'extrémité libre de l'électrode centrale, et se propage sur ledit pont jusqu'à l'électrode centrale.

Selon un mode de réalisation préféré du paratonnerre selon l'invention, la pièce isolante présente la forme d'une demi-sphère dont la surface extérieure est essentiellement convexe vers l'extérieur et supporte l'électrode extérieure électriquement conductrice, et la partie de la surface extérieure non recouverte par l'électrode extérieure, formant le pont entre cette dernière et l'électrode centrale, présente une forme de rampe généralement concave vers l'extérieur.

En outre, selon le mode de réalisation précité, ladite électrode extérieure présente la forme d'une calotte sphérique creuse.

Selon un mode de réalisation de l'invention, l'électrode extérieure et/ou l'électrode centrale est constituée par du cuivre ou par un alliage à base de cuivre.

Selon un deuxième mode de réalisation de l'invention, l'électrode extérieure et/ou l'électrode centrale est constituée par du fer ou par un alliage à base de fer.

Selon un troisième mode de réalisation de l'invention, I'électrode extérieure et/ou l'électrode centrale est constituée par de l'aluminium ou par un alliage à base d'aluminium.

Selon un autre mode de réalisation de l'invention, l'électrode extérieure est un dépôt métallique sur une partie de la surface extérieure de la pièce isolante.

Selon un mode de réalisation de l'invention, la pièce isolante est un diélectrique constitué par un matériau polymère.

Selon un autre mode de réalisation de l'invention, la pièce isolante est un diélectrique constitué par un matériau céramique.

La description qui va suivre en regard des dessins annexés, donnés à titre d'exemples non limitatifs, fera bien comprendre en quoi consiste l'invention et comment elle peut être réalisée.
- La figure 1 est une vue en coupe verticale d'un premier mode de réalisation du paratonnerre selon l'invention.
- La figure 2 est une vue en coupe verticale d'un deuxième mode de réalisation du paratonnerre selon l'invention.
- La figure 3 est une vue en coupe verticale d'un troisième mode de réalisation du paratonnerre selon l'invention.
- La figure 4 est une vue en coupe verticale d'un quatrième mode de réalisation du paratonnerre selon l'invention.
- La figure 5 est une vue en coupe verticale d'un cinquième mode de réalisation du paratonnerre selon l'invention.
- La figure 6 est une courbe montrant les variations du courant de prédécharge en fonction du temps pour un paratonnerre du type tige de Franklin classique mise dans des conditions électriques de foudroiement.
- La figure 7 est une courbe montrant les variations du courant de prédécharge en fonction du temps pour un paratonnerre à éclateur à air mis dans des conditions identiques à celle de la figure 6.
- La figure 8 est une courbe montrant les variations du courant de prédécharge en fonction du temps d'un paratonnerre selon l'invention mis dans les conditions électriques de la figure 6.

On notera préliminairement que d'une figure à l'autre, des éléments ou parties identiques ou similaires ont été désignés dans la mesure du possible par les mêmes signes de référence, et ne seront pas décrits à chaque fois.

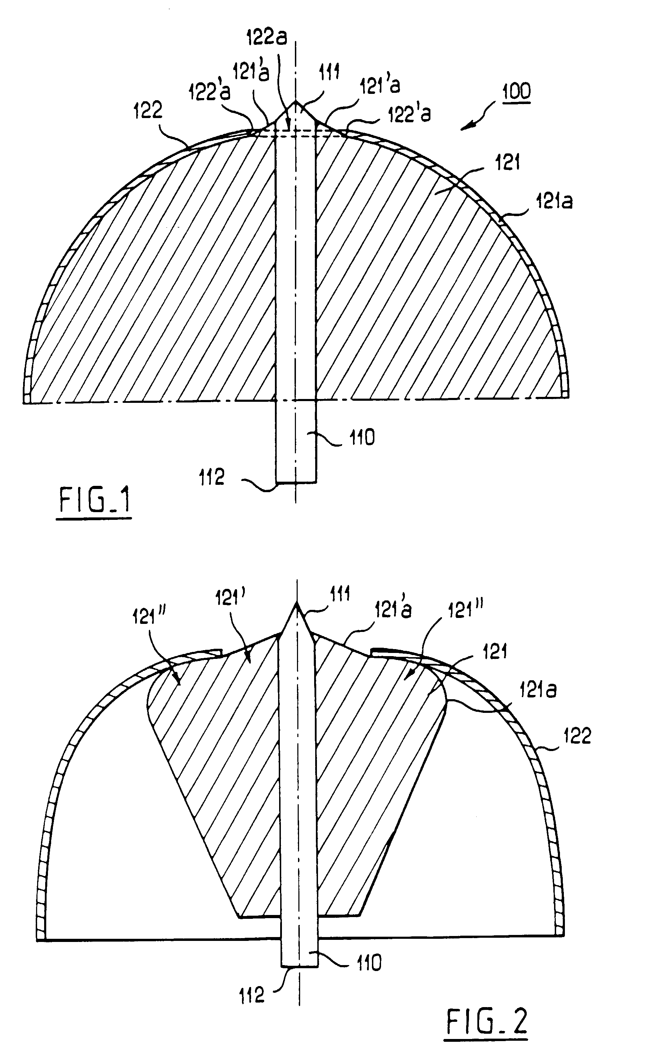

Sur la figure 1, on a représenté un paratonnerre à dispositif d'amorçage à décharge électrique glissante 100. Ce paratonnerre 100 comporte une électrode centrale métallique verticale 110 présentant une extrémité 112 destinée à être reliée à la terre et une extrémité libre 111 en forme de pointe et dirigée vers le ciel. En outre, le paratonerre 100 comprend d'une part une pièce isolante 121 entourant l'électrode centrale 110 et présentant du côté de l'extrémité libre 111 de l'électrode centrale 110 une surface extérieure 121a de révolution, et d'autre part une électrode extérieure électriquement conductrice 122 recouvrant partiellement la surface extérieure 121a de la pièce isolante 121.

De manière plus précise, la pièce isolante 121 est un diélectrique solide présentant ici la forme d'une demi-sphère dont ladite surface extérieure 121a est une surface essentiellement convexe vers l'extérieur et comportant une partie 121'a en forme de rampe concave vers l'extérieur venant se raccorder de manière continue à ladite extrémité libre 111 de l'électrode centrale 110. Ce diélectrique peut avantageusement être réalisé en matériau polymère, ou bien en matériau céramique, ou bien en une juxtaposition des deux. Il convient de préciser que le matériau diélectrique constituant la pièce isolante présente avantageusement une résistivité électrique très élevée, une bonne rigidité mécanique ainsi que des caractéristiques de non mouillabilité et de résistance aux conditions d'environnement.

Par ailleurs, ladite surface extérieure 121a convexe est recouverte partiellement par une calotte sphérique métallique creuse formant une électrode extérieure électriquement conductrice 122 qui épouse la forme convexe de la surface extérieure 121a du diélectrique 121. En fait, cette électrode extérieure 122 ne recouvre pas la partie 121'a en forme de rampe de ladite surface extérieure 121. Ladite électrode extérieure 122 comporte une ouverture supérieure circulaire 122a de telle sorte que cette partie 121'a émerge de cette ouverture 122a vers l'extérieur et forme alors un pont en matériau isolant qui s'étend entre le bord circulaire 122'a de l'ouverture supérieure circulaire 122a de l'électrode extérieure 122 et l'extrémité libre 111 de l'électrode centrale 110. L'électrode extérieure 122 peut être réalisée en fer, cuivre ou bien en aluminium, ou encore en alliage à base fer, de cuivre ou d'aluminium. Suivant une variante de réalisation, l'électrode extérieure 122 est constituée par un dépôt métallique réalisé directement sur la surface extérieure 121a de la pièce isolante 121 à recouvrir.

Dans un exemple typique, I'électrode centrale métallique 110 présente un diamètre de l'ordre d'environ 10 à 20 millimètres, la pièce isolante 121 en forme de demi-sphère présente un diamètre maximum de 25 centimètres et le pont en matériau isolant 121'a présente une longueur comprise entre 1 et 50 millimètres. Il convient de noter que l'électrode extérieure 122 peut présenter plusieurs épaisseurs. De plus, elle ne comporte avantageusement aucune partie saillante qui serait gênante pour le bon fonctionnement du paratonnerre comme cela sera explicité ultérieurement.

Sur la figure 2, on a représenté une première variante de réalisation du paratonnerre de la figure 1. Suivant cette variante, la pièce en matière isolante 121 présente une forme cylindrique de révolution qui s'élargit à partir du bas de l'électrode centrale 110 vers le haut de ladite électrode et vient se raccorder à la pointe 111. La pièce isolante 121 comprend une portion supérieure arrondie 121'' dont la surface extérieure est convexe vers l'extérieur. Cette portion supérieure 121'' se prolonge jusqu'à la pointe 111 par une partie de raccordement tronconique 121' dont la surface extérieure 121'a est en forme de rampe concave vers l'extérieur. L'électrode extérieure conductrice 122 en forme de calotte sphérique creuse recouvre partiellement la pièce isolante 121 en s'appuyant sur la portion arrondie 121'' de la pièce isolante 121 de telle sorte qu'une partie de la surface extérieure de ladite portion arrondie 121'' est la seule surface de contact entre l'électrode extérieure 122 et la pièce isolante 121. La surface extérieure 121'a de la partie tronconique 121' de la pièce isolante 121 n'est pas recouverte par l'électrode extérieure, elle s'étend entre cette dernière et la pointe 111 de l'électrode centrale 110.

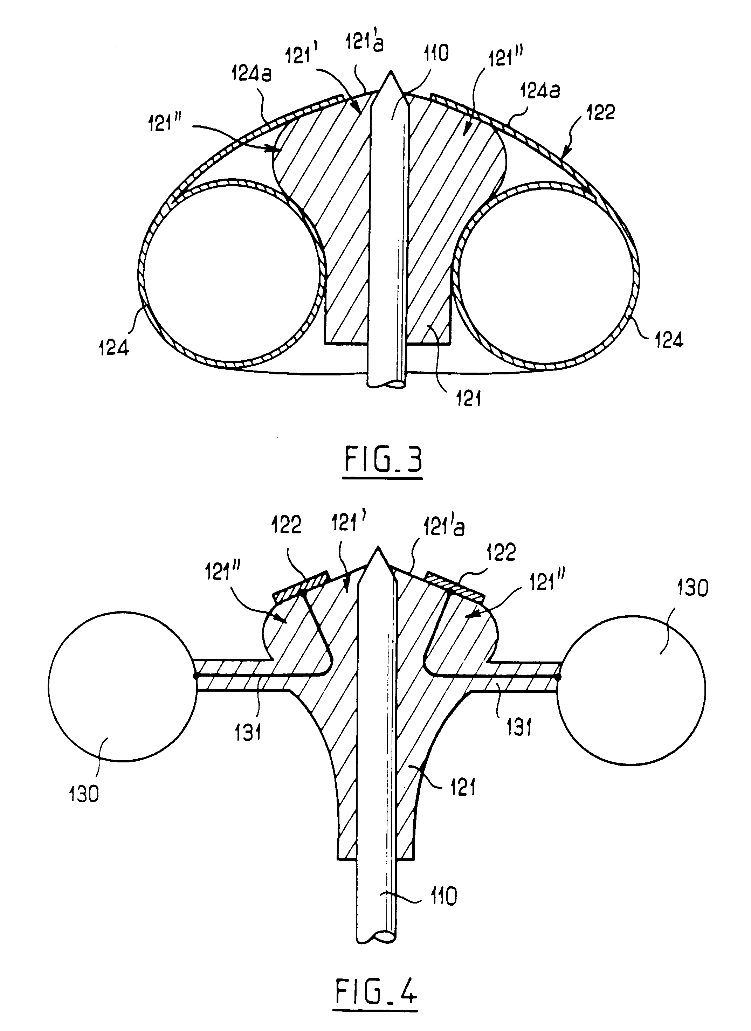

Suivant une variante de réalisation représentée sur la figure 3, l'électrode extérieure 122 présente la forme d'un tore 124 qui entoure la pièce isolante 121. Ce tore 124 comporte une jupe de raccordement 124a qui recouvre partiellement la surface extérieure de la portion supérieure arrondie 121'' de la pièce en matériau isolant 121.

Suivant une autre variante de réalisation représentée sur la figure 4, l'électrode extérieure 122 est une couronne sphérique qui recouvre partiellement la portion supérieure arrondie 121'' de la pièce isolante 121. Cette couronne sphérique est reliée par des fils électriques 131 à des sphères métalliques 130 solidaires de la pièce isolante 121. Plus précisément, la pièce isolante 121 comporte des bras qui s'étendent radialement, et qui portent à chaque bout une sphère métallique 130.

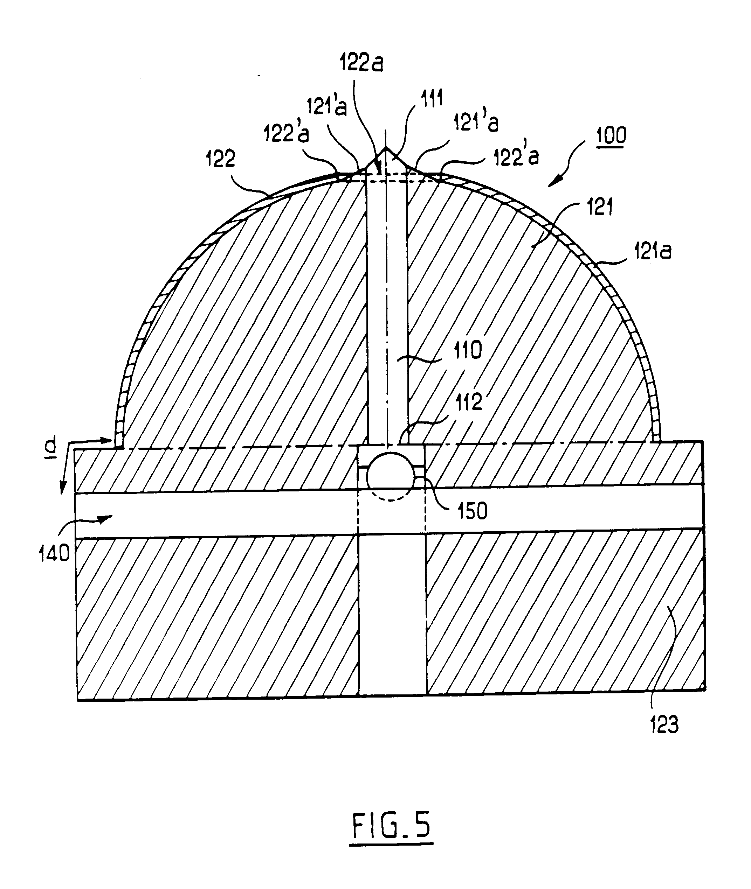

Sur la figure 5, on a représenté une autre variante de réalisation du paratonnerre de la figure 1, plus appropriée pour sa mise en place sur des conducteurs horizontaux tels que par exemple des câbles de garde des lignes électriques ou des conducteurs horizontaux de cages maillées. Selon cette variante, la pièce isolante 121 se prolonge en dessous de l'électrode extérieure 122 par une partie isolante 123 ici de forme parallélipipèdique. Cette partie de prolongement 123 peut être une partie rapportée à la pièce isolante 121 ou bien venir de formation avec celle-ci. En outre, comme on peut le voir sur la figure 5, la partie de prolongement de l'isolant 123 comporte un passage horizontal 140 pour la mise en place d'un conducteur horizontal, perpendiculairement à l'électrode centrale verticale 110. On remarquera que le passage horizontal 140 est disposé à une distance d de l'électrode extérieure 122, qui est supérieure à environ deux fois la distance entre le bord 122'a de l'électrode extérieure 122 et la pointe 111 de l'électrode centrale 110. L'électrode centrale 110 est reliée au conducteur disposé à l'intérieur du passage 140 par des moyens de connexion 150, ici une patte métallique. Le conducteur est lui-même relié à la terre.

On notera que selon une autre variante, non représentée, on peut envisager que l'extrémité 112 de l'électrode fasse saillie vers l'intérieur du passage 140 de telle sorte que le conducteur horizontal mis en place dans ledit passage vienne au contact de l'électrode verticale. En outre, on remarquera que la surface extérieure de la partie isolante de prolongement 123 n'est pas recouverte par l'électrode extérieure.

Nous allons maintenant décrire le fonctionnement du paratonnerre représenté par exemple sur la figure 1.

Lorsqu'un traceur descendant s'approche du paratonnerre à dispositif d'amorçage de la figure 1, le champ électrique extérieur augmente et l'électrode extérieure électriquement conductrice 122 se charge électriquement jusqu'à un potentiel critique à partir duquel une étincelle se forme à partir du bord circulaire 122'a de l'ouverture 122a de ladite électrode extérieure 122 et glisse sur le pont en matière isolante 121'a jusqu'à la pointe 111 de l'électrode centrale métallique 110.

Cette étincelle permet de créer un plasma au voisinage de la pointe 111 de l'électrode centrale 110, ce plasma associé au champ électrique intense régnant dans le voisinage de la pointe 111 de l'électrode centrale 110, entraîne la formation d'un traceur ascendant allant à la rencontre du traceur descendant. La jonction entre les deux traceurs opposés établit un canal conducteur entre le nuage et le sol. Le courant de foudre s'écoule alors à la terre via l'électrode centrale métallique.

Il convient de préciser que le pont 121'a permet de guider l'étincelle de décharge entre l'électrode extérieure 122 et l'électrode centrale 110, cette étincelle étant alors beaucoup plus vigoureuse que dans les autres paratonnerres de la technique antérieure utilisant un éclateur à air.

En outre, le champ électrique d'autopropagation de l'étincelle de déclenchement est jusqu'à 10 fois plus faible que dans le cas des paratonnerres utilisant un éclateur à air.

Par ailleurs, le fait que l'électrode extérieure 122 ne présente aucune partie saillante, permet avantageusement d'éviter la formation d'étincelles parasites à d'autres endroits que le bord circulaire 122'a de ladite électrode extérieure.

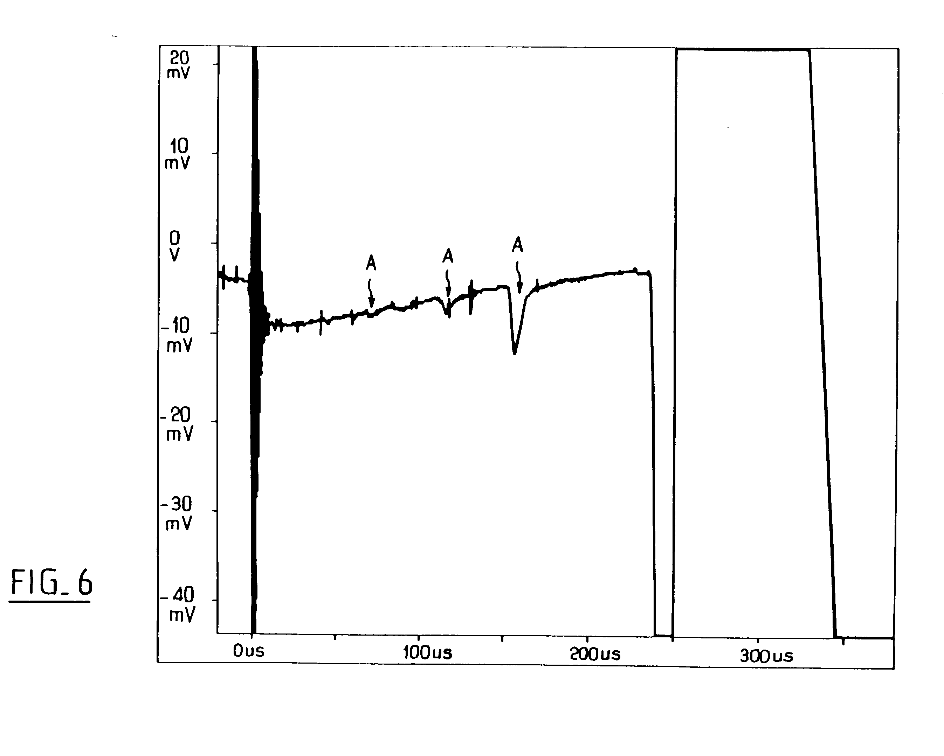

Les figures 6, 7 et 8 montrent pour trois paratonnerres différents mis dans des conditions électriques de foudroiement identiques, à savoir une tige de Franklin classique (non représentée), un paratonnerre à éclateur à air (non représenté) et un paratonnerre à dispositif d'amorçage selon l'invention, des courbes expérimentales retraçant les variations du courant de prédécharge à la pointe des différents dispositifs en fonction du temps.

Plus précisément, les trois paratonnerres ont été testés en laboratoire avec une procédure d'essais qui simule les conditions de foudroiement. C'est-à-dire, qu'on crée un champ électrique ambiant simulant le champ produit par la répartition des charges dans un nuage orageux et un champ impulsionnel représentant le champ induit par l'approche du traceur descendant au voisinage du sol. Ces deux champs sont superposés et appliqués à un plateau (non représenté sur les figures) situé au-dessus du paratonnerre en question. Le champ ambiant est représenté par un champ continu de l'ordre de 10 à 20 kVolts/m entre le sol et le plateau, et le champ impulsionnel est créé par un générateur de Marx qui délivre une onde de manoeuvre à temps de montée long compris entre 200 et 1000 microsecondes.

Dans les conditions précitées, on observe l'évolution du courant de prédécharge à la pointe de chaque paratonnerre en fonction du temps, jusqu'à la formation et la propagation d'une décharge ascendante se propageant de la pointe du paratonnerre jusqu'au plateau supérieur.

Dans le cas de la tige de Franklin classique, on observe sur la figure 6, que la courbe d'évolution du courant de prédécharge en fonction du temps, présente entre l'instant d'application de la tension impulsionnelle à t = 0 et 250 microsecondes des impulsions aléatoires A correspondant à des tentatives infructueuses de démarrage de la décharge ascendante. Cette décharge quitte la pointe de la tige de Franklin à un temps voisin de 250 microsecondes et traverse ensuite l'espace de la pointe vers le plateau.

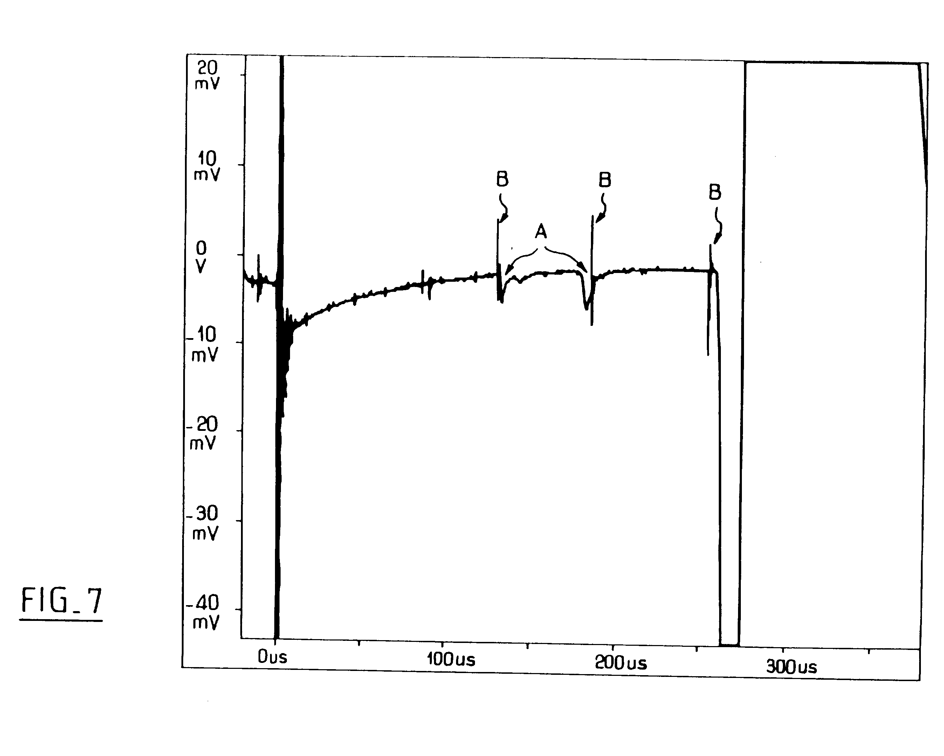

Dans le cas du paratonnerre à éclateur à air, comme le montre la figure 7, la décharge ascendante se propage à partir de la pointe à un instant compris entre 250 et 300 microsecondes, plus tard que pour la tige de Franklin classique (voir figure 6). On remarquera que, comme sur la figure 6, des impulsions aléatoires de type A sont enregistrées. Les trois impulsions fines B observées correspondent à un amorçage de l'éclateur à air, les deux premières correspondant à un fonctionnement prématuré de l'éclateur à air pour faire démarrer la décharge ascendante.

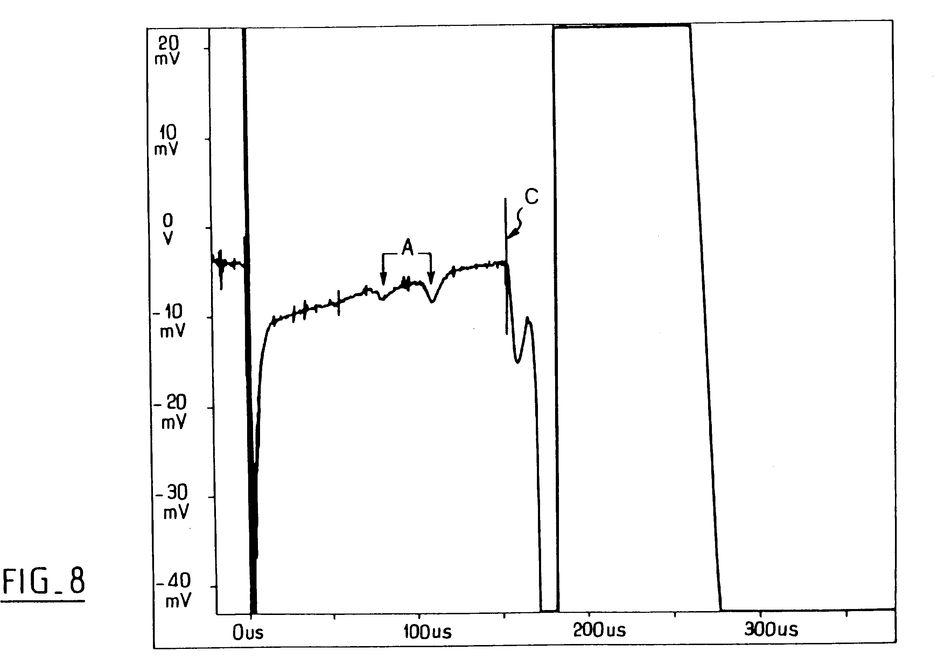

Par contre, comme le montre la figure 8, dans le cas du paratonnerre à dispositif d'amorçage à décharge glissante le long d'un diélectrique selon l'invention, tel que celui de la figure 1, la décharge se produit beaucoup plus tôt, entre 150 et 200 microsecondes. L'allumage du système d'amorçage marqué par une grande impulsion fine C à 160 microsecondes, autorise un démarrage instantané de la décharge ascendante. Une étude statistique de ce paratonnerre démontre la régularité et la fiabilité du déclenchement anticipé de la décharge ascendante par rapport au cas de la tige de Franklin et du paratonnerre à éclateur à air précité.

L'examen comparatif des figures 6 et 8 met en évidence une réduction très importante du temps de développement de la décharge de capture, due à son initiation anticipée, issue d'un paratonnerre selon l'invention par rapport à la décharge de capture issue d'un paratonnerre du type Franklin classique mis dans des conditions électriques de foudroiement identiques. Le paratonnerre selon l'invention permet donc de déclencher la décharge de capture pour des intensités de champ d'initiation plus faibles que pour la tige du type Franklin classique.

On conviendra que les différents modes de réalisation représentés sur les figures décrites peuvent se combiner les uns avec les autres.

Par exemple, on peut envisager que la pièce isolante présente une surface extérieure à facettes recouverte partiellement par l'électrode extérieure. Cette pièce isolante comporte en outre une partie supérieure essentiellement tronconique qui prolonge la partie à facettes jusqu'à l'extrémité supérieure de l'électrode centrale.

## Revendications

1. Paratonnerre (100) à dispositif d'amorçage à décharge électrique pour la protection contre la foudre, comprenant :
- une électrode centrale (110) présentant une extrémité libre (111) et une extrémité reliée à la terre (112),
- une pièce en matériau isolant (121) entourant l'électrode centrale (110) et présentant une surface extérieure (121a) venant se raccorder de manière continue à l'extrémité libre (111) de l'électrode centrale (110),
- une électrode extérieure électriquement conductrice (122) recouvrant partiellement ladite surface extérieure (121a) de la pièce isolante (121) de telle façon qu'une partie (12l'a) non recouverte de ladite surface extérieure (121a), qui vient se raccorder à l'extrémité libre (111) de l'électrode centrale, définit un pont en matériau isolant entre ladite électrode extérieure (122) et l'extrémité libre (111) de l'électrode centrale (110),
ledit pont étant apte à guider une étincelle entre l'électrode extérieure électriquement conductrice (122), chargée électriquement dans des conditions atmosphériques appropriées, et l'extrémité libre (111) de l'électrode centrale (110) pendant la décharge de ladite électrode extérieure (122).

2. Paratonnerre selon la revendication 1, caractérisé en ce que ladite surface extérieure (121a) de la pièce isolante (121) comporte au moins une portion de forme essentiellement convexe vers l'extérieur et en ce que l'électrode extérieure électriquement conductrice (122) repose sur cette portion convexe de la surface extérieure (121a).

3. Paratonnerre selon l'une des revendications 1 ou 2, caractérisé en ce que la pièce isolante (121) présente la forme d'une demi-sphère dont la surface extérieure (121a) est essentiellement convexe vers l'extérieur et supporte l'électrode extérieure électriquement conductrice (122), et en ce que la partie (121'a) de la surface extérieure (121a) non recouverte par l'électrode extérieure (122), formant le pont entre cette dernière et l'électrode centrale (110), présente une forme de rampe généralement concave vers l'extérieur.

4. Paratonnerre selon la revendication 3, caractérisé en ce que la pièce isolante (121) est une demi-sphère de diamètre maximum égal à environ 25 centimètres, et en ce que le pont en matériau isolant présente une longueur entre 1 et 50 millimètres.

5. Paratonnerre selon l'une des revendications 1 ou 2, caractérisé en ce que la pièce isolante (121) présente une forme qui s'élargit à partir de l'électrode centrale (110) vers le haut, comportant une portion supérieure arrondie (121'') présentant une surface extérieure convexe vers l'extérieur qui supporte l'électrode extérieure conductrice (122) et une portion de raccordement, entre l'électrode extérieure (122) et l'extrémité libre (111) de l'électrode centrale, de forme tronconique.

6. Paratonnerre selon l'une des revendications 1 à 5, caractérisé en ce que ladite électrode extérieure (122) présente la forme d'une calotte sphérique creuse.

7. Paratonnerre selon la revendication 5, caractérisé en ce que l'électrode extérieure (122) présente la forme d'une couronne sphérique (123) recouvrant au moins partiellement la surface extérieure de la portion supérieure arrondie (121'') de la pièce isolante (121), et est associée électriquement à des sphères métalliques (130) solidaires de la pièce isolante (121).

8. Paratonnerre selon la revendication 5, caractérisé en ce que l'électrode extérieure (122) présente la forme d'un tore (124) qui entoure la pièce isolante (121) et qui comporte une jupe de raccordement (124a) qui recouvre partiellement la surface extérieure (121a) de la portion supérieure arrondie (121'') de la pièce en matériau isolant (121).

9. Paratonnerre selon l'une quelconque des revendications 1 à 8, caractérisé en ce que la pièce en matériau isolant (121) se prolonge en dessous de l'électrode extérieure (122) par une partie isolante (123), ladite partie de prolongement (123) comprenant un passage horizontal (140) pour la mise en place d'un conducteur horizontal, et en ce qu'il comporte des moyens de connexion (150) entre l'électrode centrale (110) et le conducteur horizontal mis en place dans ledit passage (140).

10. Paratonnerre selon l'une des revendications I à 9, caractérisé en ce que l'électrode extérieure (122) est constituée par du cuivre ou un alliage à base de cuivre.

11. Paratonnerre selon l'une des revendications I à 9, caractérisé en ce que l'électrode extérieure (122) est constituée par du fer ou un alliage à base de fer.

12. Paratonnerre selon l'une des revendications I à 9, caractérisé en ce que l'électrode extérieure (122) est constituée par de l'aluminium ou un alliage à base d'aluminium.

13. Paratonnerre selon l'une des revendications I à 9, caractérisé en ce que l'électrode extérieure (122) est un dépôt métallique réalisé sur une partie de la surface extérieure (121a) de la pièce isolante (121).

14. Paratonnerre selon l'une quelconque des revendications I à 13, caractérisé en ce que l'électrode centrale (110) est constituée par du fer ou un alliage à base de fer.

15. Paratonnerre selon l'une quelconque des revendications I à 13, caractérisé en ce que l'électrode centrale (110) est constituée par du cuivre ou un alliage à base de cuivre.

16. Paratonnerre selon l'une quelconque des revendications I à 13, caractérisé en ce que l'électrode centrale (110) est constituée par de l'aluminium ou un alliage d'aluminium.

17. Paratonnerre selon l'une des revendications I à 16, caractérisé en ce que la pièce isolante (121) est un diélectrique constitué par un matériau polymère.

18. Paratonnerre selon l'une des revendications I à 16, caractérisé en ce que la pièce isolante (121) est un diélectrique constitué par un matériau céramique.

## Patentansprüche

1. Blitzableiter (100) mit einer Zündvorrichtung mit elektrischer Entladung zum Schutz gegen den Blitz, welche umfaßt:
- eine Zentralelektrode (110), welche ein freies Ende (111) und ein mit der Erde verbundenes Ende (112) aufweist,
- ein Element aus einem isolierenden Material (121), welches die Zentralelektrode (110) umgibt und eine äußere Oberfläche (121a) aufweist, welche sich in kontinuierlicher Weise an das freie Ende (111) der Zentralelektrode (110) anschließt,
- eine elektrisch leitende äußere Elektrode (122), welche teilweise die äußere Oberfläche (121a) des isolierenden Elements (121) derart bedeckt, daß ein nicht bedeckter Teil (121'a) der äußeren Oberfläche (121a), welcher sich an das freie Ende (111) der Zentralelektrode anschließt, eine Brücke aus einem isolierenden Material zwischen der äußeren Elektrode (122) und dem freien Ende (111) der Zentralelektrode (110) definiert,
wobei diese Brücke in der Lage ist, einen Funken zwischen der elektrisch leitenden äußeren Elektrode (122), die unter entsprechenden atmosphärischen Bedingungen elektrisch aufgeladen ist, und dem freien Ende (111) der Zentralelektrode (110) während der Entladung der äußeren Elektrode (122) zu führen.

2. Blitzableiter nach Anspruch 1, dadurch gekennzeichnet, daß die äußere Oberfläche (121a) des isolierenden Elements (121) mindestens einen Abschnitt mit einer im wesentlichen nach außen hin konvexen Form aufweist und daß die elektrisch leitende äußere Elektrode (122) auf diesem konvexen Abschnitt der äußeren Oberfläche (122a) ruht.

3. Blitzableiter nach einem der Ansprüche 1 oder 2, dadurch gekennzeichnet, daß das isolierende Element (121) die Form einer Halbkugel aufweist, deren äußere Oberfläche (121a) im wesentlichen nach außen hin konvex ist und die elektrisch leitende äußere Elektrode (122) trägt, und daß der Teil (121'a) der äußeren Oberfläche (121a), der nicht von der äußeren Elektrode (122) bedeckt ist und die Brücke zwischen dieser letzteren und der Zentralelektrode (110) bildet, die allgemeine Form einer nach außen hin konkaven Rampe aufweist.

4. Blitzableiter nach Anspruch 3, dadurch gekennzeichnet, daß das isolierende Element (121) eine Halbkugel mit einem maximalen Durchmesser von ungefähr 25 cm ist und daß die Brücke aus isolierendem Material eine Länge zwischen 1 mm und 50 mm aufweist.

5. Blitzableiter nach einem der Ansprüche 1 oder 2, dadurch gekennzeichnet, daß das isolierende Element (121) eine Form aufweist, die sich ausgehend von der Zentralelektrode (110) nach oben verbreitert und einen abgerundeten oberen Abschnitt (121"), der eine nach außen hin konvexe äußere Oberfläche aufweist, welche die leitende äußere Elektrode (122) trägt, und einen Verbindungsabschnitt zwischen der äußeren Elektrode (122) und dem freien Ende (111) der Zentralelektrode mit einer kegelstumpfartigen Form aufweist.

6. Blitzableiter nach einem der Ansprüche 1 bis 5, dadurch gekennzeichnet, daß die äußere Elektrode (122) die Form einer hohlen sphärischen Kappe aufweist.

7. Blitzableiter nach Anspruch 5, dadurch gekennzeichnet, daß die äußere Elektrode (122) die Form eines sphärischen Kranzes (123) aufweist, welcher zumindest teilweise die äußere Oberfläche des abgerundeten oberen Abschnitts (121") des isolierenden Elements (121) bedeckt und elektrisch mit metallischen Kugeln (130) verbunden ist, welche an dem isolierenden Element (121) angebracht sind.

8. Blitzableiter nach Anspruch 5, dadurch gekennzeichnet, daß die äußere Elektrode (122) die Form eines Torus (124) aufweist, welcher das isolierende Element (121) umgibt und der einen Verbindungssaum (124a) aufweist, welcher teilweise die äußere Oberfläche (121a) des abgerundeten oberen Abschnitts (121") des Elements aus einem isolierenden Material (121) bedeckt.

9. Blitzableiter nach einem der Ansprüche 1 bis 8, dadurch gekennzeichnet, daß das Element aus einem isolierenden Material (121) sich unterhalb der äußeren Elektrode (122) in einem isolierenden Abschnitt (123) fortsetzt, wobei dieser Verlängerungsabschnitt (123) einen horizontalen Durchlaß (140) zum Anbringen eines horizontalen Leiters aufweist, und daß er eine Einrichtung (150) für eine Verbindung zwischen der Zentralelektrode (110) und dem in dem Durchlaß (140) angebrachten horizontalen Leiter aufweist.

10. Blitzableiter nach einem der Ansprüche 1 bis 9, dadurch gekennzeichnet, daß die äußere Elektrode (122) aus Kupfer oder einer Kupferlegierung besteht.

11. Blitzableiter nach einem der Ansprüche 1 bis 9, dadurch gekennzeichnet, daß die äußere Elektrode (122) aus Eisen oder einer Eisenlegierung besteht.

12. Blitzableiter nach einem der Ansprüche 1 bis 9, dadurch gekennzeichnet, daß die äußere Elektrode (122) aus Aluminium oder einer Aluminiumlegierung besteht.

13. Blitzableiter nach einem der Ansprüche 1 bis 9, dadurch gekennzeichnet, daß die äußere Elektrode (122) eine metallische Schicht ist, die auf einem Teil der äußeren Oberfläche (121a) des isolierenden Elements (121) ausgebildet ist.

14. Blitzableiter nach einem der Ansprüche 1 bis 13, dadurch gekennzeichnet, daß die Zentralelektrode (110) aus Eisen oder einer Eisenlegierung besteht.

15. Blitzableiter nach einem der Ansprüche 1 bis 13, dadurch gekennzeichnet, daß die Zentralelektrode (110) aus Kupfer oder einer Kupferlegierung besteht.

16. Blitzableiter nach einem der Ansprüche 1 bis 13, dadurch gekennzeichnet, daß die Zentralelektrode (110) aus Aluminium oder einer Aluminiumlegierung besteht.

17. Blitzableiter nach einem der Ansprüche 1 bis 16, dadurch gekennzeichnet, daß das isolierende Element (121) ein Dielektrikum ist, das aus einem Polymermaterial besteht.

18. Blitzableiter nach einem der Ansprüche 1 bis 16, dadurch gekennzeichnet, daß das isolierende Element (121) ein Dielektrikum ist, das aus einem Keramikmaterial besteht.

## Claims

1. A lightning conductor (100) having an electric discharge initiator device, for providing protection against lightning, the conductor comprising:
a central electrode (110) having a free end (111) and an end (112) connected to ground;
a part (121) made of insulating material, surrounding the central electrode (110), and having an outer surface (121a) that touches the free end (111) of the central electrode (110) continuously;
an electrically conductive outer electrode (122) partially covering said outer surface (121a) of the insulating part (121) in such a manner that a non-covered portion (121'a) of said outer surface (121a) that connects to the free end (111) of the central electrode defines a bridge of insulating material between said outer electrode (122) and the free end (111) of the central electrode (110),
said bridge being suitable, during discharge of said outer electrode (122), for guiding a spark between the electrically conductive outer electrode (122) that is electrically charged under appropriate atmospheric conditions, and the free end (111) of the central electrode (110).

2. A lightning conductor according to claim 1, characterized in that said outer surface (121a) of the insulating part (121) includes at least one portion whose shape is essentially convex towards the outside, and in that the electrically conductive outer electrode (122) rests on said convex portion of the outer surface (121a).

3. A lightning conductor according to claim 1 or 2, characterized in that the insulating part (121) is in the form of a hemisphere whose outer surface (121a) is essentially convex towards the outside and which supports the electrically conductive outer electrode (122), and in that the portion (121'a) of the outer surface (121a) that is not covered by the outer electrode (122) and that forms the bridge between said electrode and the central electrode (110) is in the form of a ramp that is generally concave towards the outside.

4. A lightning conductor according to claim 3, characterized in that the insulating part (121) is a hemisphere having a maximum diameter equal to about 25 centimeters, and in that the bridge of insulating material has a length lying in the range 1 mm to 50 mm.

5. A lightning conductor according to claim 1 or 2, characterized in that the insulating part (121) is of a shape that flares upwards going away from the central electrode (110), and that includes a rounded top portion (121") having an outer surface that is convex towards the outside and that supports the conductive outer electrode (122), and a connection portion between the outer electrode (122) and the free end (111) of the central electrode, which connection portion is frustoconical in shape.

6. A lightning conductor according to any one of claims 1 to 5, characterized in that said outer electrode (122) is in the form of a hollow spherical cap.

7. A lightning conductor according to claim 5, characterized in that the outer electrode (122) is in the form of a spherical zone (123) covering at least a portion of the outer surface of the rounded top portion (121") of the insulating part (121), and is electrically associated with metal spheres (130) secured to the insulating part (121).

8. A lightning conductor according to claim 5, characterized in that the outer electrode (122) is in the form of a torus (124) that surrounds the insulating part (121) and that includes a connecting skirt (124a) which partially covers the outer surface (121a) of the rounded top portion (121") of the part (121) made of insulating material.

9. A lightning conductor according to any one of claims 1 to 8, characterized in that the part (121) of insulating material extends beneath the outer electrode (122) in the form of an insulating portion (123), said extension portion (123) comprising a horizontal passage (140) for receiving a horizontal conductor, and in that it includes connection means (150) between the central electrode (110) and the horizontal conductor placed in said passage (140).

10. A lightning conductor according to any one of claims 1 to 9, characterized in that the outer electrode (122) is made of copper or of a copper-based alloy.

11. A lightning conductor according to any one of claims 1 to 9, characterized in that the outer electrode (122) is made of iron or of an iron-based alloy.

12. A lightning conductor according to any one of claims 1 to 9, characterized in that the outer electrode (122) is made of aluminum or of an aluminum-based alloy.

13. A lightning conductor according to any one of claims 1 to 9, characterized in that the outer electrode (122) is a metal deposit formed on a portion of the outer surface (121a) of the insulating part (121).

14. A lightning conductor according to any one of claims 1 to 13, characterized in that the central electrode (110) is made of iron or of an iron-based alloy.

15. A lightning conductor according to any one of claims 1 to 13, characterized in that the central electrode (110) is made of copper or of a copper-based alloy.

16. A lightning conductor according to any one of claims 1 to 13, characterized in that the central electrode (110) is made of aluminum or of an aluminum-based alloy.

17. A lightning conductor according to any one of claims 1 to 16, characterized in that the insulating part (121) is made of a dielectric constituted by a polymer material.

18. A lightning conductor according to any one of claims 1 to 16, characterized in that the insulating part (121) is made of a dielectric constituted by a ceramic material.
